# EUROPEAN PATENT APPLICATION

(11) **EP 2 374 689 A1**
(43) Date of publication of application: **12.10.2011**
(21) Application number: 11160879.0
(22) Date of filing: 01.04.2011
(51) Int. Cl.: B62B 1/12, B62B 1/26, B62B 5/00

(54) **Trolley with two wheels for carrying heavy loads such as plant pots**

(30) Priority: 01.04.2010 IT PD20100104
(71) Applicant: Gastaldi, Christian, 35131 Padova (IT)
(72) Inventor: Barbieri, Lucio, 35025 Cartura PD (IT)
(74) Representative: Modiano, Micaela Nadia

(57) **Abstract**

A trolley (10) with two wheels (11, 12) for carrying heavy loads, particularly for carrying potted plants, constituted by a base structure (13) to which two mutually opposite coaxial wheels (11, 12) for movement on the ground are pivoted, a steering bar (14) protruding from the base structure (13) and being provided, at its upper end, with means (15) for grip on the part of an operator.

The trolley has grip or resting contact means (17) for loads of the nursery-gardening and building type and the like, and it comprises balancing means (18) for balancing at least partially the load carried by the trolley (10) in the configuration for movement.

## Description

The present invention relates to a trolley with two wheels, for carrying heavy loads, particularly for carrying potted plants.

Nowadays trolleys with two wheels are known for nursery-gardening which are constituted by an upright member, generally with a profile that is curved or angled or a combination of the two for a better leverage to lift the load, being provided at its lower end with a base structure to which two mutually opposite coaxial wheels are pivoted, each on its own hub or on a same shaft, and at its upper end with means for grip on the part of an operator, such as two opposing handles with grip.

Fixed at the lower end of the member is a grip device for a medium-to-large size pot, for example a device of the type comprising two elastic toothed jaws for gripping the folded upper rim of the pot, and a lower abutment for resting the rim of the bottom of the pot.

These trolleys are typically pushed by hand by an operator who uses them every day for moving a great many heavy plants in pots, with enormous expenditure of effort, both for lifting the pot and also for pushing the trolley with the pot and the plant over a slippery and yielding surface that is typical of greenhouses and nursery-gardens, such as chippings, soil or other non-rigid surface with holes.

Indeed, the bigger the pot, in terms of diameter, the greater the torque, resulting from the weight force of the pot with the plant contained in it, that is generated with respect to the rest points of the wheels on the ground, and therefore the greater the force that an operator has to exert on the maneuvering upright member or on the handlebars in order to defeat this torque and arrange the trolley in the inclined carrying configuration.

Furthermore, the greater the weight of the potted plant, the greater the inclination with which the operator has to keep the handlebars of the trolley towards the ground in order to diminish the effort required to defeat the torque resulting from the weight force of the potted plant, and the greater the inclination of the handlebars towards the ground, the more inconvenient it is to push the trolley.

Normally the use of such a trolley requires two operators, such are the inconvenience and effort in handling such a means of transport in the narrow rows of plants in pots which are typical of nursery-gardens.

The aim of the present invention is to provide a trolley with two wheels for carrying heavy loads, particularly for carrying potted plants, which requires a smaller force for its inclination when loaded, and which enables a diminished thrust or traction force to be required of an operator that maneuvers it, compared to known trolleys.

Within this aim, an object of the invention is to develop a trolley with two wheels, with encumbrances that are not greater than equivalent trolleys of the known type.

Another object of the invention is to provide a trolley with two wheels which can also be equipped for transporting articles that are not pots, but rather for example for transporting building materials, such as sacks, bricks and the like.

Another object of the invention is to provide a trolley with two wheels which is easy to maneuver and to use in general, even for an operator who does not have specific prior training.

Another object of the invention is to provide a trolley with two wheels, for carrying heavy loads, particularly for carrying potted plants, which can be produced using systems and technologies that are known per se, as well as at low cost.

This aim and these objects as well as others which will become better evident hereinafter are achieved by a trolley with two wheels, for carrying heavy loads, particularly for carrying potted plants, constituted by a base structure to which two mutually opposite coaxial wheels for movement on the ground are pivoted, a steering bar protruding from said base structure and being provided, at its upper end, with means for grip on the part of an operator, said trolley being characterized in that it has grip or resting contact means for loads of the nursery-gardening and building type and the like, and in that it comprises balancing means for balancing at least partially the load carried by the trolley in the configuration for movement.

Further characteristics and advantages of the invention will become better apparent from the description of a preferred, but not exclusive, embodiment of the trolley with two wheels, for carrying heavy loads, particularly for carrying potted plants, according to the invention, illustrated by way of non-limiting example in the accompanying drawings wherein:
Figure 1 is a perspective view of the trolley according to the invention;
Figure 2 is another perspective view of the trolley according to the invention;
Figure 3 is a perspective view from below of a detail of the means for motorizing the wheels;
Figures 4 and 5 are end elevation views respectively of the configuration for rest and configuration for transport of the trolley according to the invention;
Figures 6 and 7 each show a different embodiment of the trolley according to the invention.

With reference to the figures, a trolley with two wheels according to the invention is generally designated in the figures with the reference numeral 10.

The trolley 10 is thus of the type with two wheels, 11 and 12 respectively, and is constituted by a base structure 13 to which two mutually opposite coaxial wheels 11, 12 for movement on the ground are pivoted, a steering bar 14 protruding from the base structure 13 and being provided, at its upper end, with means 15 for grip on the part of an operator.

In the embodiment of the invention described herein for the purposes of non-limiting example of the invention, the steering bar 14 is constituted by an upright member which is composed of tubular portions with a rectilinear extension 14a, 14b and 14c, the first two joined consequentially so as to define an angled profile of the upright member 14, and the third portion 14c which can also be rigidly fixed or, as described below, articulated to the second tubular portion 14b by means of a pivot with an axis that is substantially parallel to the axis of rotation of the wheels 11 and 12.

The means 15 for grip on the part of an operator are constituted by a handlebars with two mutually opposite grips 16, but it is understood that they can also be of another similar and equivalent type.

Associated with the steering bar 14 are means 17, which are better described below, of lifting loads of the nursery-gardening and building type and the like.

The trolley 10 according to the invention is characterized in that it has balancing means 18 for the at least partial balancing of the load carried by the trolley 10 in the configuration for movement.

In the embodiment of the trolley 10 described herein for the purposes of non-limiting example of the invention, the balancing means 18 are constituted by a tilting frame 19 for supporting a container 20 for removable counterweight masses 21.

The removable counterweight masses 21 can be specially-made weights, or they can be bricks, tiles, wall tiles, rocks or other elements used commonly in the nursery-gardening and building sectors.

The container 20 is provided with a cover 22 that can be opened in order to access the masses 21.

The means of opening and closing the cover 22, which are not shown for the sake of simplicity, are understood to be of known type per se, and can be implemented with means that are known and which are simple to handle manually, for example ball grips with a threaded bar, or with tools, such as screwdrivers, spanners and the like, if screws are used, where the cover is for example hinged to the container by means of hinges, which are also of known type.

With such a trolley 10 according to the invention, once the pot to be carried has been gripped, by inclining the trolley 10 in the configuration of transport the frame 19 rotates under the weight force of the masses 21, which move away from the wheels 11 and 12 and produce a torque to contrast the weight force produced by the potted plant.

In this way the operator's effort in order to keep the trolley 10 inclined is at least partially attenuated.

In the present distinctive embodiment described here, which is to be understood as a non-limiting example of the invention, the trolley 10 according to the invention comprises means 23 for motorizing the mutually opposite wheels 11, 12.

The motorization means 23 are constituted by an electric motor 24 enclosed in a housing 25 at the base structure 13 of the steering bar 14.

The motorization means 23 advantageously comprise a differential 26 which is interposed between the electric motor 24 and one of the wheels, for example a first wheel 11; the presence of the electric motor 24 alleviates the efforts of an operator when pushing the inclined trolley, and the differential makes it possible to optimize the maneuvering of the trolley 10 within the narrow rows of plants which are typical of nursery-gardens and greenhouses.

The electric motor 24 is powered by at least one battery.

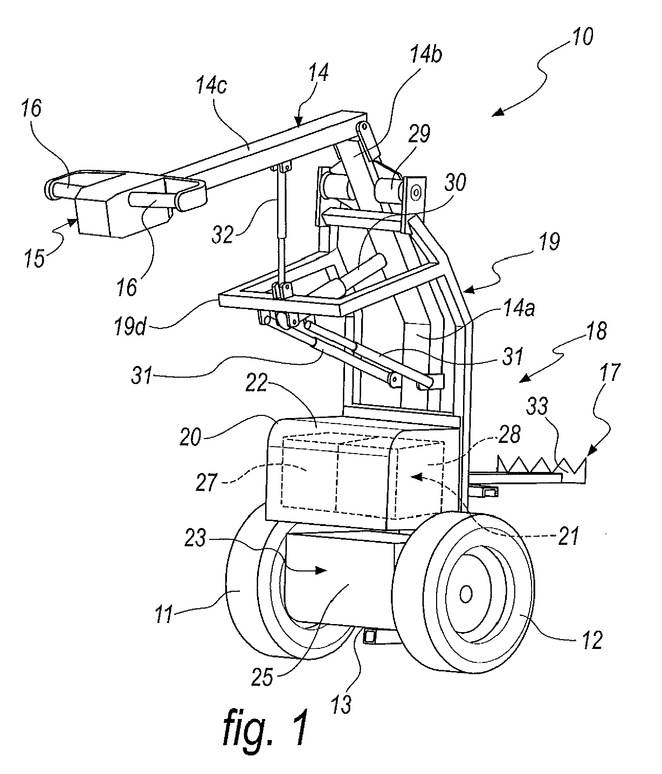

In the embodiment of the invention described herein, and which can be seen in Figure 1, there are two batteries 27 and 28, carried inside the container 20 supported by the frame 19.

The batteries 27 and 28, which tilt with the support frame 19 pivoted to the steering bar, form the masses 21 of the counterweight load balancing means, for balancing at least partially the load carried by the trolley 10 in the configuration for movement.

The frame 19 comprises two lateral arms 19a and 19b, and a cross-member 19c, with the two upper ends of the arms pivoted by means of a through pivot to two opposite coaxial sleeves 29 which are fixed to the steering bar 14.

The counterweight balancing means also comprise a C-shaped element, designated in Figure 1 with the reference numeral 19d, which is part of the frame 19, on the central portion of which a first end of a linear actuator 30, for example electric, is pivoted, the second opposite end of the actuator 30 being pivoted to the steering bar 14.

The action of the linear actuator 30 is adapted to accompany the moving away of the frame 19 that carries the batteries 27 and 28 that act as the counterweight, in order to assume a configuration of use and of transport of a plant, as well as to accompany the moving of the frame 19 back toward the steering bar 14 when returning to a configuration of non-use or of gripping the plant as described below, and also in order to stabilize the position of the frame 19 and of the batteries 27 and 28 during the movement of the trolley 10, thus impeding the oscillation of the frame 19.

Auxiliary pusher means are interposed between the C-shaped element 19d and the first portion 14a of the steering bar, said auxiliary pusher means being designed to facilitate the movement of the frame 19, and therefore of the batteries, away from the base structure 13 of the trolley 10.

The auxiliary pusher means, in the present embodiment of the invention, are constituted by a pair of symmetrical gas springs 31.

In the present embodiment, as indicated above, the third upper tubular portion 14c of the steering bar 14 is articulated to the contiguous second tubular portion 14b, being pivoted thereto, by virtue of known means such as a through pivot, along an axis which is parallel to the axis of the wheels.

A strut 32 of adjustable length is interposed between the C-shaped element 19d and the third tubular portion 14c of the steering bar 14, and is pivoted to both by a corresponding end thereof.

The adjustable length of the strut 32, for example telescopic, makes it possible to stabilize a different height of the grip means 15 according to the needs, and physique, of the operator who is handling the trolley 10 according to the invention.

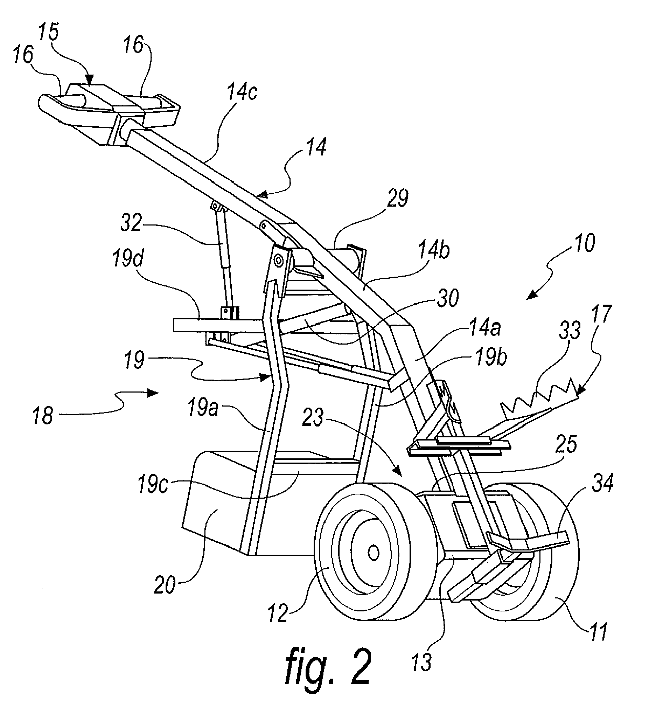

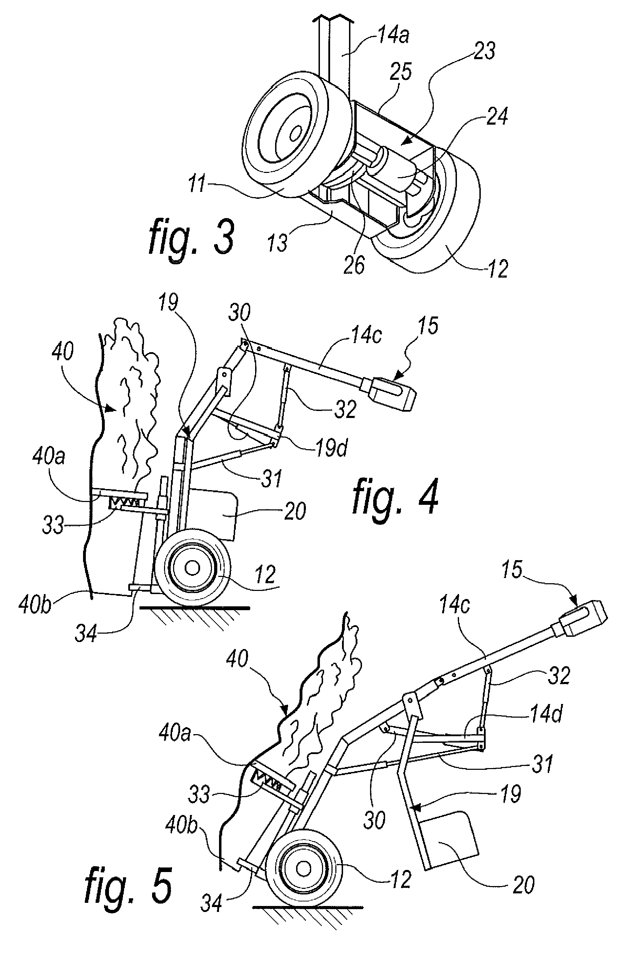

Indeed, as the trolley 10 is inclined in the configuration for use and the batteries 27 and 28 move away from the wheels 11 and 12, as can clearly be seen in Figures 2 and 5, the frame 19 rotates and the strut 32 pushes the third tubular portion 14c upward, i.e. toward a more convenient position for grip on the part of an operator, who does not have to bend over in order to grasp the grip means 15.

As shown in Figures 4 and 5, when an operator inclines the steering bar 14 in order to then be able to push the trolley 10 loaded with the potted plant 40, the frame 19 inclines and moves away from the base structure of the steering bar 14, and the batteries 27 and 28 move away from the center of gravity of the loaded trolley 10, and with their weight they produce a torque that is designed to balance part of the load, with respect to an axis that passes through the rest points on the ground, said rest points being constituted by the regions of contact of the wheels with the ground.

The moving away of the battery container 20, which is fixed to the frame 19, is governed by the linear actuator 30 and assisted by the gas springs 31.

The repositioning of the battery container 20 in the configuration of rest or of grip, as in Figure 4, is also governed by the linear actuator 30.

The lifting means 17 for loads of the nursery-gardening type are constituted by a device of the type that comprises two toothed jaws 33, which can be divaricated elastically, for gripping the widened or folded upper rim 40a of a pot 40, and a lower abutment 34 for resting the rim of the bottom 40b of the pot.

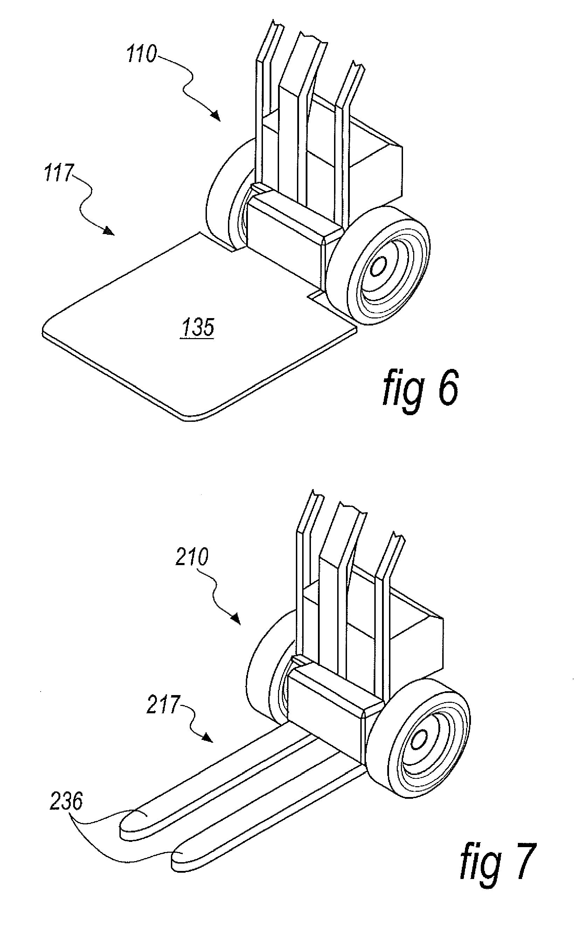

In another embodiment of the trolley according to the invention, designated in Figure 6 with the reference numeral 110, the lifting means 117 are constituted by a deck 135.

In another embodiment of the trolley according to the invention, designated in Figure 7 with the reference numeral 210, the lifting means 217 are constituted by forks 236.

In practice it has been found that the invention fully achieves the intended aim and objects.

In particular, with the invention a trolley with two wheels is provided, for carrying heavy loads, particularly for carrying potted plants, which by virtue of the counterweight balancing means requires a smaller force for its inclination when loaded, and which enables a smaller thrust or traction force to be required of an operator that maneuvers it, compared to known trolleys, by virtue of the use of the motorization means.

Furthermore, with the invention a trolley with two wheels is provided with encumbrances that are not greater than equivalent trolleys of the known type, and thus implemented so as to be usable without any problems in the narrow rows which are typical of nursery-gardens and greenhouses.

What is more, with the invention a trolley with two wheels is provided which can also be equipped for transporting articles that are not pots, but rather for example for transporting building materials, such as sacks, bricks and the like, or for transporting pallets, by means of the adoption of suitable forks.

Furthermore, with the invention a trolley is provided which is easy to maneuver and to use in general, even for an operator who does not have specific prior training, it being necessary to have simple commands like a start and stop button located on the handlebars, or other similar commands.

Furthermore, with the invention a trolley with two wheels is provided, for carrying heavy loads, particularly for carrying potted plants, which can be produced using systems and technologies that are known per se, as well as at low cost.

The invention thus conceived is susceptible of numerous modifications and variations, all of which are within the scope of the appended claims. In addition, all the details may be replaced by other, technically equivalent elements.

In practice the materials employed, as well as the contingent dimensions and shapes, may be any according to requirements and to the state of the art.

The disclosures in Italian Patent Application No. PD2010A000104 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A trolley (10) with two wheels (11, 12) for carrying heavy loads, particularly for carrying potted plants, constituted by a base structure (13) to which two mutually opposite coaxial wheels (11, 12) for movement on the ground are pivoted, a steering bar (14) protruding from said base structure (13) and being provided, at its upper end, with means (15) for grip on the part of an operator, said trolley being **characterized in that** it has grip or resting contact means (17) for loads of the nursery-gardening and building type and the like, and **in that** it comprises balancing means (18) for balancing at least partially the load carried by the trolley (10) in the configuration for movement.

2. The trolley according to claim 1, **characterized in that** said balancing means (18) are constituted by a tilting frame (19) for supporting a container (20) for removable counterweight masses (21).

3. The trolley according to the preceding claims, **characterized in that** said removable counterweight masses (21) are constituted by bricks, tiles, wall tiles, rocks or other elements used commonly in the nursery-gardening and building sectors.

4. The trolley according to the preceding claims, **characterized in that** it comprises means (23) for motorizing said mutually opposite wheels (11, 12), which comprise an electric motor (24) powered by at least one battery carried inside said container (20) supported by the frame (19), said at least one battery (27) forming a mass of the load balancing means.

5. The trolley according to the preceding claims, **characterized in that** said frame (19) comprises two lateral arms (19a, 19b) and a cross-member (19c), with the two upper ends of the arms pivoted by means of a through pivot to two opposite coaxial sleeves (29) which are fixed to the steering bar (14).

6. The trolley according to the preceding claims, **characterized in that** said counterweight balancing means also comprise a C-shaped element (19d), which is part of the frame (19), on the central portion of which a first end of a linear actuator (30) is pivoted, the second opposite end of said actuator being pivoted to the steering bar (14).

7. The trolley according to the preceding claims, **characterized in that** auxiliary pusher means are interposed between said C-shaped element (19d) and the first portion (14a) of the steering bar and are designed to facilitate the rotation of the frame (19) away from the base structure (13).

8. The trolley according to the preceding claims, **characterized in that** the third upper tubular portion (14c) of the steering bar (14) is articulated to the contiguous second tubular portion (14b), being pivoted thereto, by virtue of known means such as a through pivot, along an axis which is parallel to the axis of the wheels.

9. The trolley according to claim 8, **characterized in that** a strut (32) of adjustable length is interposed between the C-shaped element (19d) and the third tubular portion (14c) of the steering bar (14) and is pivoted to both by a corresponding end thereof.

10. The trolley according to the preceding claims, **characterized in that** said lifting means (17) for loads of the nursery-gardening type are constituted by a device of the type that comprises two toothed jaws (33), which can be divaricated elastically, for gripping the upper rim (40a) of a pot (40), and a lower abutment (34) for resting the rim of the bottom (40b) of the pot.
